# EUROPEAN PATENT SPECIFICATION

(11) **EP 1 474 539 B1**
(45) Date of publication and mention of the grant of the patent: **12.11.2008**
(21) Application number: 03705552.2
(22) Date of filing: 14.02.2003
(51) Int. Cl.: G01V 15/00, G06K 19/04, G06K 19/077

(54) **METHOD AND APPARATUS FOR THE MANUFACTURE OF A TAG**
VERFAHREN UND VORRICHTUNG ZUR HERSTELLUNG EINER MARKIERUNG
PROCEDE DE FABRICATION D'ETIQUETTE ET APPAREIL

(30) Priority: 14.02.2002 NZ 51722502
(43) Date of publication of application: 10.11.2004
(73) Proprietor: Ensid Investments Ltd, Auckland (NZ)
(72) Inventor: Clarke, Ross Robert, 1309 Auckland (NZ)
(74) Representative: Bittner, Thomas L.
(86) International application number: PCT/NZ2003/000025
(87) International publication number: WO 2003/069012

(56) References cited:
- EP-A- 1 168 236
- US-A- 5 048 179
- US-A- 5 173 150
- US-A- 5 895 235
- US-A- 5 963 132
- US-A- 6 113 724
- DATABASE WPI Week 199603, Derwent Publications Ltd., London, GB; Class A85, AN 1996-025692, XP002992544 & JP 7 297 552 A (SUMITOMO BAKELITE CO LTD) 10 November 1995
- DATABASE WPI Week 198702, Derwent Publications Ltd., London, GB; Class A32, AN 1987-010849, XP002992545 & JP 61 268 415 A (MITSUBISHI DENKI KK) 27 November 1986

## Description

The present invention relates to methods and apparatus for the manufacture of a tag and in particular but not exclusively to a tag including a transponder and method and apparatus for the production thereof.

For animal tagging using a transponder, a small transponder is often required to minimise the effect on the animal. Traditionally transponders of small dimensions have been provided in a glass case, the glass case protecting the electronics of the transponder from the environment.

After animals have been tagged using a transponder, there is a chance that the animal will be consumed. With a small transponder, the transponder and its casing may also be consumed. Consumption of a glass case can be hazardous, which may prevent the use of small transponders.

In order to obtain the maximum benefit from a tagging programme, transponders should be as robust and reliable as possible.

Means of identification other than transponders may also be used. Transponders have an advantage of relative ease of detection and not requiring their own power source. However, other devices may be required, many of which may be electronic such as a sensor, processor and memory to record information. These may be susceptible to damage in certain environments, even if provided in a casing.

Document EP 1 168 236 describes a method for producing an integrated circuit tag, in which an integrated circuit is first coated with a first resin material. Afterwards the coated integrated circuit is coated with a second resin material. This prior art is aknowledged in the preamble of claims 1 and 27.

Documents US 6,113,724 and US 5,048,179 both disclose methods for enclosing integrated circuit chips in resin material. In certain embodiments of these known methods, vacuum is applied in order to remove air bubbles that might be present or be formed in the resin material.

Thus, it is an object of the present invention to provide an apparatus and/or method of production of tags that overcomes or alleviates problems in apparatuses and methods of production of tags at present or at least provides the public with a useful alternative.

Further objects of the invention may become apparent from the following description.

### Summary of the Invention

According to a first aspect of the invention, there is provided a method of manufacturing a tag according to claim 1.

Preferably, the pre-coat of binding material may be the same material as the further binding material.

Preferably, the method may further include subjecting at least one of the pre-coat of binding material and further binding material to a vacuum prior to steps a) and c) respectively.

Preferably, step a) may include subjecting the electronic device and pre-coat of binding material to a vacuum prior to the application of the pre-coat of binding material and maintaining the vacuum during application of the pre-coat of binding material.

Preferably, the method may include subjecting the further binding material to a vacuum after performing step c).

Preferably, the method may further include vibrating at least one of the pre-coat of binding material and further binding material relative to the electronic device while the binding material is subjected to a vacuum.

Preferably, step b) may be of sufficiently short duration so that when the resulting pre-coated electronic device is located in the further binding material, the pre-coat fuses with the further binding material.

Preferably, the method may further include applying heat to the pre-coat of binding material prior to performing step a).

Preferably, the method may further include applying heat to the further binding material prior to performing step c).

Preferably, the method may further include applying heat to the further binding material immediately after performing step c).

Preferably, the binding material may be epoxy resin and the method includes applying heat to the further binding material at a temperature of approximately 60 - 100 degrees Celsius.

Preferably, step a) may include allowing the electronic device to locate within a volume of said binding material substantially under its own weight.

Alternatively, step a) may include immersing the electronic device within a volume of said binding material at a speed approximate to the speed that the electronic device would sink into the binding material under its own weight.

Preferably, step c) may include allowing the pre-coated electronic device to locate within a volume of said further binding material substantially under its own weight.

Alternatively, step c) may include immersing the pre-coated electronic device within a volume of said binding material at a speed approximate to the speed that the electronic device would sink into the binding material under its own weight.

Preferably, the speed of immersion may be a maximum speed that has been predetermined experimentally.

Preferably, step c) may include locating the pre-coated electronic device and further binding material within a casing that forms an outer shell for the tag and step d) includes allowing the binding material to cure within the casing.

Preferably, the casing includes one or more guides to position the pre-coated electronic device within the casing.

Preferably, the pre-coat of binding material, further binding material and casing may be constructed from materials suitable for consumption.

Preferably, the pre-coat of binding material and further binding material may be epoxy resin and the casing may be acrylic.

Preferably, the electronic device may be a transponder.

Preferably, step d) may include partially curing at a first temperature greater than ambient temperature and then completing curing at a second temperature, less than the first temperature.

Preferably, the second temperature may be ambient temperature.

Preferably, the produced tag may have a length less than approximately 20 mm.

Preferably, the produced tag may have a diameter less than approximately 15 mm.

Preferably, the produced tag may have a diameter less than 10 mm.

According to a further aspect of the invention, there is provided apparatus for embedding an electronic device having an antenna winding within a binding material, the apparatus including:
a receptacle for holding binding material in a liquid state;
a mould or a jig for holding a casing;
filling means for filling said mould or a casing held by said jig with further binding material; transport means and an associated controller operable to receive one or more electronic devices from a supply of electronic device, perform a pre-coating operation by moving received electronic devices into said receptacle for holding binding material, and then move said electronic devices into said mould or into a casing held by said jig; and
a vacuum chamber containing said receptacle for holding binding material operable to create a vacuum at the surface of the binding material during at least part of the pre-coating operation to remove air from behind the antenna winding of the or each electronic device.

Preferably, the transport means may be further operable to move said mould or said casing into the vacuum chamber after it has moved said electronic devices into said mould or casing.

Preferably, the transport means may include a closure means for the vacuum chamber that moves with the transport means and the transport means is engageable with the one or more electronic devices or with the mould or casing through an arm that extends into the vacuum chamber from the closure means when the closure means has closed the vacuum chamber.

Preferably, the transport means may include a robotic arm assembly movable about a pivot located outside of the vacuum chamber.

Preferably, the apparatus may include two vacuum chambers located in different sectors about said pivot, each vacuum chamber including a receptacle for holding binding material in a liquid state and the robotic arm assembly includes two of said arms that extend into the vacuum chamber, each movable about said pivot.

Preferably, the apparatus may include two endless conveyors that index a plurality of said moulds or jigs past the transport means.

Preferably, the filling means may be located along said endless conveyors upstream of the transport means.

Further aspects of the present invention may become apparent from the following description, which is given by way of example only and with reference to the accompanying drawings.

### Brief Description of the Drawings

Figure 1: shows a schematic, cut-away, side view representation of a tag manufactured in accordance with the present invention.
Figure 2: shows the tag of Figure 1 located in a jig, which is located on a support.
Figure 3: shows a schematic representation of a robotic arm assembly used to perform the step of applying a pre-coat of binding material to transponders.
Figures 4A, B: show diagrammatically the step of applying a vacuum to the binding material during the pre-coat step.
Figures 5A, B: show diagrammatically the step of applying a vacuum to the casing filled with pre-coated transponders.
Figures 6A. B: shows a schematic representation of an alternative robotic arm assembly that may be used in the manufacture of a tag.
Figure 7: shows a schematic plan view of a production line for manufacturing tags in accordance with the present invention.

### Detailed Description of the Drawings

The present invention relates to the manufacture of a tag. The invention may have particular application to the manufacture of tags including a transponder as an identification device, although other electronic devices may be used including other electronic identifiers, microprocessors, sensing and recording circuitry, transmitters and receivers and any associated components or other components that may be used in the identification, tracking, recording of the movements and/or recording of the environment of animals. The present invention may have particular application to electronic devices that are susceptible to damage and may also have particular application to the manufacture of small tags having a length of less than approximately 20 mm and a diameter less than approximately 15 mm. More particularly, the produced tags may have a diameter less than 10 mm.

The applicant has found through experimentation that the presence of air bubbles within a tag may contribute to the failure of transponder tags. An increased failure rate may be present when the tag is exposed to an environment having a varying pressure. Such an environment may result, for example, when the tag is used to identify fish. Air bubbles may also contribute to the failure of other electronic devices embedded in binding material. Therefore, it is desirable to produce tags that have no air or reduced amounts of air trapped within the binding material.

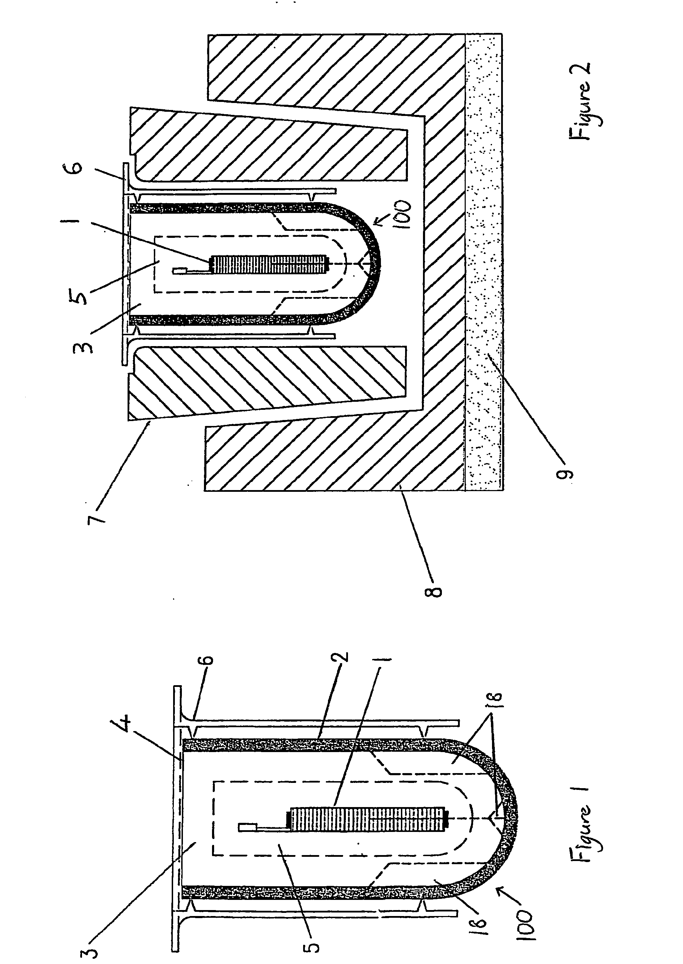

Referring to Figure 1, a side, schematic, cut-away view of a tag 100 constructed in accordance with the present invention is shown. The tag 100 is held in a receptacle 6 and includes an identification device, in this example a transponder 1, a casing 2, which may be acrylic, and a binding material 3 to hold the transponder 1 in the casing 2. The casing 2 has an opening 4, which in use receives the transponder 1 so that the transponder 1 may be located within an enclosure defined by the casing 2. The tag 100 may be one of a plurality of like tags held in a cartridge of interconnected receptacles 6.

Figure 2 shows a jig 7, located on a support 8 and holding the receptacle 6. A vibrator 9 may be provided with the support 8. The vibrator 9 may be an unbalanced rotating weight, or a suitable electrical vibrator, that when operated vibrates the jig 7 and receptacle 6 in either one or both the horizontal and vertical axes. As is described in more detail herein below, the support 8 and vibrator 9 may be located in a vacuum chamber, allowing a vacuum to be applied to the tag 100 during manufacture.

Figures 1 and 2 show the final form of tag, in which the binding material 3 is left to cure. A pre-coat of binding material 5 is provided about the transponder 1 prior to insertion of the transponder 1 into the casing 2. The process to manufacture the tag 100 is detailed below.

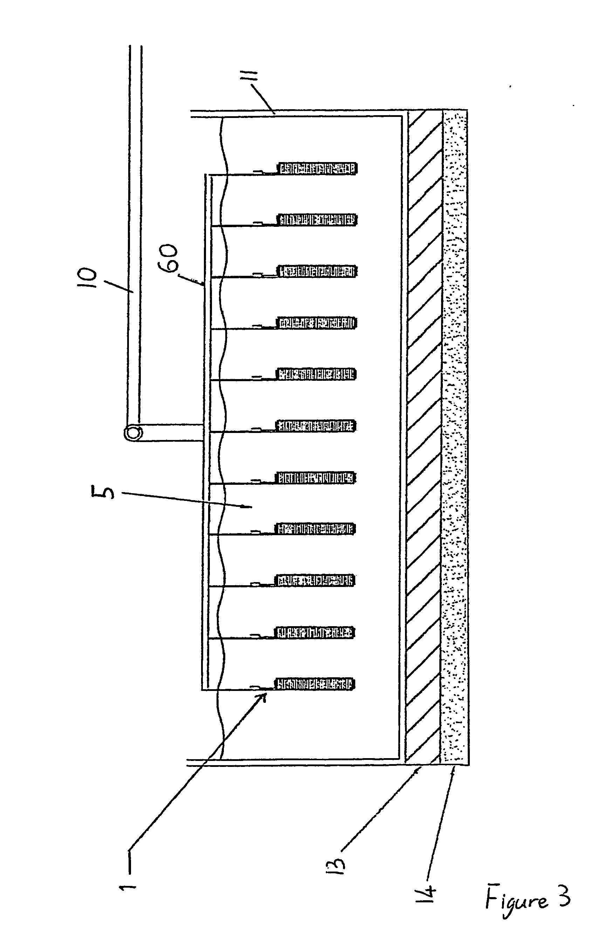

Referring to Figure 3, a schematic representation of apparatus for pre-coating transponders 1 is shown. A plurality of transponders 1 are each attached to a cartridge 60. The cartridge 60 is transported by a robotic arm assembly 10 that is operable to move the cartridge 60 and its attached transponders 1 into a vat 11 containing binding material 5 in liquid state. The liquid binding material 5 may be heated by a heating element 13 and the vat 11 and/or robotic arm assembly 10 may be vibrated by a vibrator 14. The coupling, if any, between the vibrator 14 and robotic arm assembly 10 or cartridge 60 is not shown in Figure 3.

When the transponders 1 are immersed in the liquid binding material 5, air may become trapped behind their windings. To limit the extent that air is trapped, the transponders 1 may be lowered into the liquid binding material 5 slowly. The rate of immersion may suitably be comparable to the rate that would occur if the transponders 1 were sinking into the liquid binding material 5 under their own weight. An increased rate of immersion may be used depending on the characteristics of the binding material 5, including its viscosity, which will depend on the temperature to which it is heated. A maximum speed of immersion may be found experimentally. The applicant has found through testing that particularly good results can be achieved by manually placing transponders onto a pool of liquid binding material 5 and allowing them to sink and this represents an alternative method of production that may be suited to smaller production volumes.

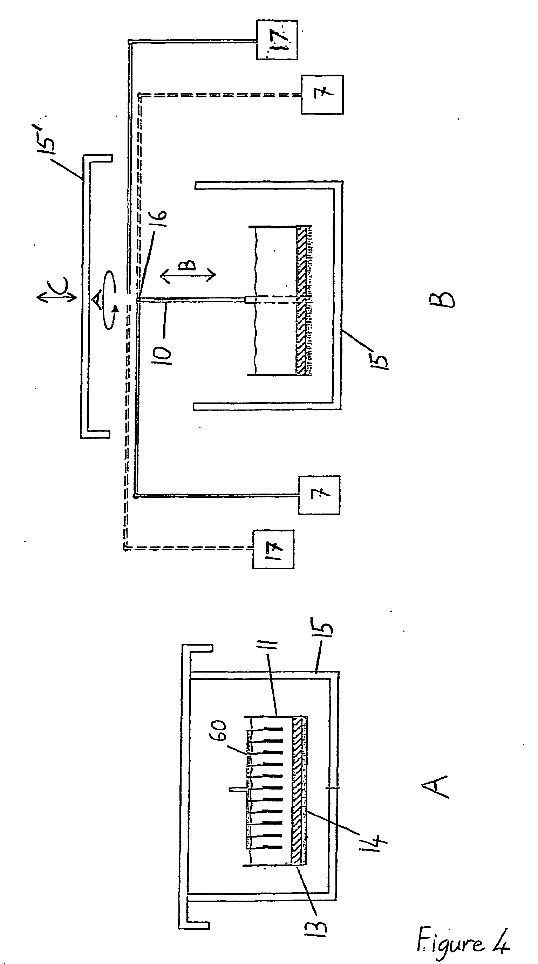

Referring now to Figures 4A and 4B, the liquid binding material 5 is located in a vacuum chamber 15. The vacuum chamber 15 creates a vacuum at the surface of the liquid binding material 5, which may assist in the removal of air from behind the windings of the transponders 1. Vibration and/or heat may be applied to the liquid binding material 5 and transponders 1 while they are located in the vacuum chamber 15 through the heating element 13 and vibrator 14 respectively. A vacuum may also be applied to the binding material 5 and transponders 1 prior to the insertion of the transponders 1 to assist in the removal of any air in the binding material 5 and to evacuate air from about the transponders 1.

The liquid binding material 5 may be epoxy resin and may be heated to a temperature between approximately 60 to 100 degrees Celsius. The temperature selected represents a trade-off between decreasing the viscosity of the binding material, thereby allowing easier removal of air and the decreasing the curing time. The viscosity should also be controlled so that the binding material adheres to the transponders 1 and does not simply run off the transponders when they are removed from the vat 11.

As the binding material 5 becomes unusable after it cures to a certain extent, it is replaced periodically. Fresh binding material may be used for every cartridge 60 in order to maximise the temperature that the binding material 5 may be heated to. If multiple pre-coatings are performed the temperature may need to be reduced, which may require an increase the applied vacuum or vibrating the binding material 5 and/or transponders 1 if they were not vibrated before, in order to remove the same amount of air. The level of vacuum applied may be the maximum that avoids excessive volatiles being removed from the binding material 5. The vat 5 may be shaped complimentary to the area occupied by the transponders 1 in order to minimise any waste binding material not applied to the transponders.

The liquid binding material 5, adheres to the transponders 1, which therefore remain covered by a layer of liquid binding material 5 when removed from the vat 11. To form the tag 100, the transponders 1 are removed from the vat 11 and transferred into a casing 2, which has been pre-filled with binding material 3 in liquid state. The insertion of the pre-coated transponders 1 into the casings 2 should be delayed sufficiently so that the pre-coat cures sufficiently so as not to be entirely displaced from the transponder during insertion. However, the binding material 5 may be only partially cured to allow it to fuse at its boundary with the binding material 3 upon insertion, thereby avoiding a fixed boundary between the binding materials 3 and 5. The applicant believes that this avoidance of a fixed boundary may further increase the reliability/robustness of the tag 100. Allowing the pre-coated transponders to sink into the binding material 3 under their own weight or inserting the pre-coated transponders into the binding material 3 slowly, suitably at a similar rate to that which the transponders 1 were immersed into the liquid binding material 3, may reduce the sheer action on the binding material 5, allowing the pre-coated transponders to be inserted earlier without displacing the binding material 3. Using this rate of immersion and epoxy resin heated to approximately 85 degrees Celsius, a curing time of about one minute has been found suitable.

The pre-coated transponders 1 may be severed from the cartridge 60 when partially immersed in the binding material 5, in which case each pre-coated transponder 1 would sink into the binding material 5 under its own weight. Guides 18 (see Figure 1) may be provided to maintain the pre-coated transponders 1 centrally in their respective casing 2.

The binding materials 3 and 5 may of the same type, although this is not essential, and both may suitably be an epoxy resin. The epoxy resin used may one that is safe for consumption, which may be essential for safety reasons where the tag is to be used in animals. Similarly, the casing 2 may be constructed from a consumable acrylic rather than from glass or other material considered unsafe for consumption.

The vacuum chamber 15 may be elongate and as shown in Figure 4B, in one embodiment, the robotic arm assembly 10 may be contained inside the vacuum chamber 15 and may have two arms that move about a pivot 16 as indicated by arrow A and movable vertically as indicated by arrow B in order to move cartridges of transponders 1 between the vat 11 and the casings 2 (not shown in Figure 4) located on jigs 7 positioned alongside the vacuum chamber 15. The robotic arm assembly 10 may receive cartridges 60 from a supply of transponders 17. The lid 15' also moves vertically as indicated by arrow C to allow the robotic arm assembly 10 to extend out of the vacuum chamber 15.

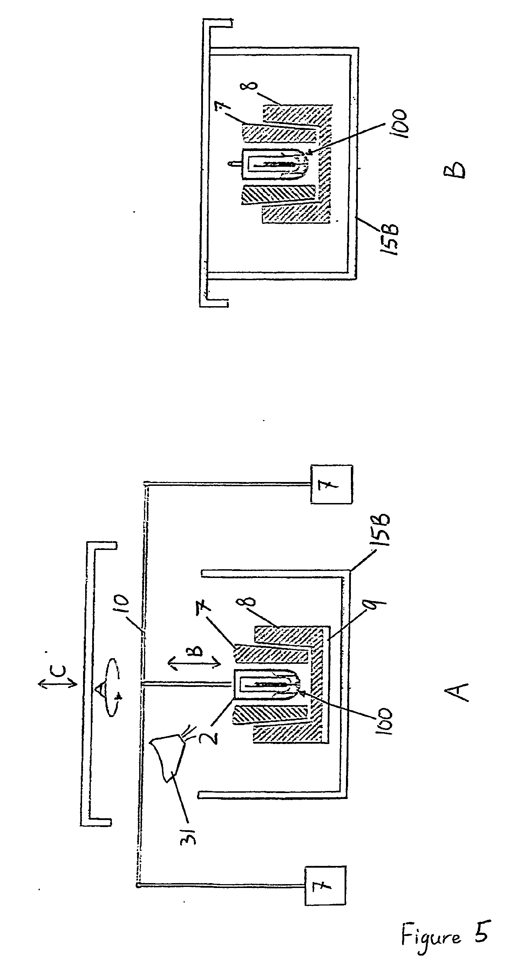

Referring to Figures 5A and 5B, a vacuum may also be applied to the casings 2. The vacuum may be applied by a vacuum chamber 15B, which may be the same chamber or a different chamber from vacuum chamber 15. In the instance that it is the same vacuum chamber, the robotic arm assembly 10 may drop the jig 7 into the vacuum chamber 15 on a support 8 located next to the vat 15. The jig 7 and casings 2 may be vibrated by a vibrator 9 during the application of vacuum. Heat may also be applied to the casings 2, for example by using a blower 31 to force hot air of approximately 60 to 100 degrees Celsius (for epoxy resin binding material) over the casings 2. The heating may be performed prior to the application of vacuum pressure outside the vacuum chamber. Alternative methods of heating may be used including, for example, using a heating element that heats the casings 6 through the jig 7.

The robotic arm assembly 10 may alternatively directly carry casings 2 or a cartridge of casings 2 into the vacuum chamber 15 rather than carrying the casings in a jig.

The vacuum and vibration and/or heating may continue until the binding material has cured to an extent that air can not travel through it. This time may vary depending on the resin used and the temperature of the binding material 5 during curing, but for epoxy resin heated to approximately 85 degrees Celsius it may be approximately 20 to 25 minutes. The binding material may then be cured in an oven at approximately 60 degrees Celsius for approximately 30 minutes, then left to cure at ambient for 24 hours prior to distribution or use of the tag 100.

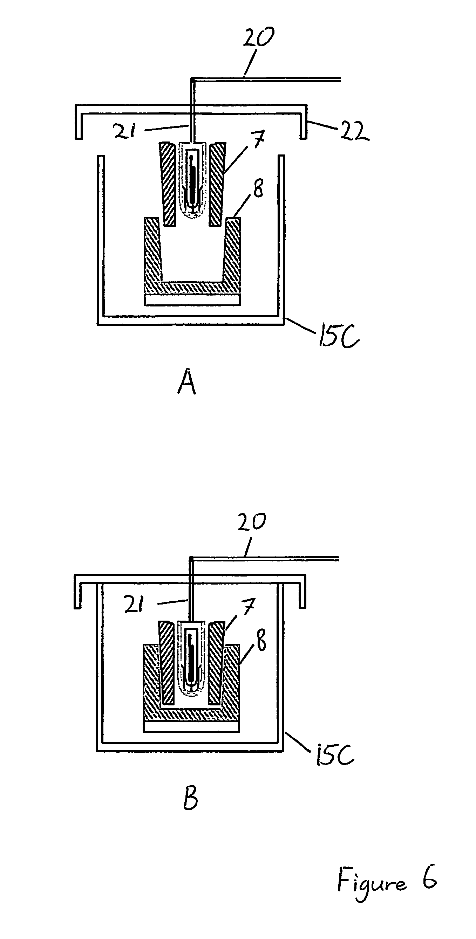

Figures 6A, 6B show an alternative robotic arm assembly 20 which is located outside a vacuum chamber 15C. Using this embodiment, smaller vacuum chambers may be used, as they do not need to accommodate the robotic arm assembly 10. An arm 21 of the robotic arm assembly includes a lid 22 or other stop for closing the vacuum chamber 15C (see Figure 6B). The robotic arm assembly 20 may be used to insert a cartridge of transponders 1 into a vacuum chamber for pre-coating and/or used to transport casings 2 into a vacuum chamber. Figures 6A, 6B show the later application. A suitable engagement means (not shown) at the end of the robotic arm assembly 10 is provided below the lid 22 to engage with the cartridges 60 and/or jigs 7. Where a vacuum is required to be formed prior to and/or during insertion of the transponders 1 and/or pre-coated transponders 1, the arm 21 may telescope or otherwise move relative to the lid 22.

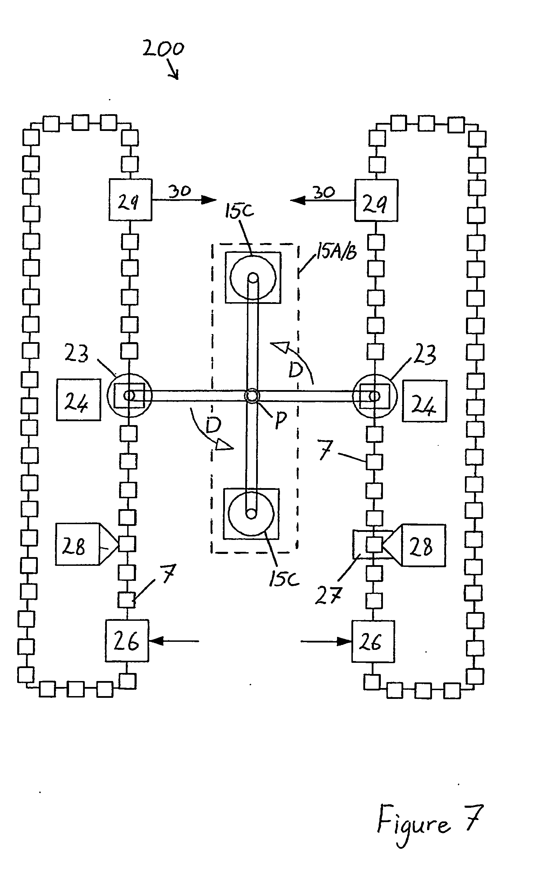

Figure 7 shows a plan view of a robotic arm assembly 20 as a part of a production line 200. The robotic arm assembly 20 is movable about a pivot P as indicated by arrows D between two load stations 23, where cartridges 60 or jigs 7 holding pre-filled casings 2 are picked up, and two vacuum chambers 15C. The load stations 23 may include a supply of cartridges 24 and be in communication with an indexing conveyor 25 that supplies casings 2 pre-filled with liquid binding material 3 to the load stations 23 and transports the casings 2 away from the load stations 23 after they have received pre-coated transponders 1.

In use, the indexing conveyor 25 indexes round an endless loop, conveying jigs 7 along its path. At station 26 empty casings 2, which may advantageously be in cartridges that separate the casings 2 by the same distance as the separation of transponders 1 in their cartridges, are located onto jigs 7. At station 27, the casings 2 are filled with liquid binding material 3. An air-powered injector 28 may be used for this purpose. The binding material 3 may have been heated, for example by the application of hot air, and located in a vacuum prior to injection into the casings.

Simultaneously to the above, the robotic arm assembly 20 picks up a cartridge of transponders 1 from each supply of transponders 24 at load stations 23 and transports these into a vat (not shown in Figure 7) of binding material 5 in the vacuum chambers 15C, thereby sealing the vacuum chambers 15C and allowing them to apply a vacuum to the binding material 5. The vacuum chamber 15C may evacuate air from its internal cavity prior to insertion of the cartridges of transponders 1 into the binding material 5 and maintain the vacuum during insertion, removing air from about the transponders 1 even before they are inserted in the binding material. After a predetermined time, dependent on the viscosity of the binding material 5 and the magnitude of the applied vacuum, the cartridge of transponders 1 is removed from the vat 11 and vacuum chamber 15C and inserted into waiting casings 2 filled with binding material 3 at load stations 23.

The robotic arm assembly 20 may then pick up the jigs 7 containing the filled casings 2, and move them into the vacuum chambers 15C, replacing the jigs'7 on the index conveyor 25 after the vacuum has been applied. Heat may be applied during or prior to the application of vacuum and the casings 2 may be vibrated while they are in a vacuum chamber 15C. The index conveyor 25 then moves the filled casings 2 to station 29, where the casings 2 are removed for curing, which may at least initially be performed in an oven 30.

Figure 7 also shows in outline a vacuum chamber 15A or vacuum chamber 15B if they are different. The index conveyors 25 may still run past the vacuum chamber 15A/15B.

In an alternative embodiment, different vacuum chambers may be used for the pre-coat stage from those used to apply a vacuum to the filled casings. In this embodiment, two robotic arm assemblies 200 may be used, interconnected by the indexing conveyor 25. Also, the binding material 3 may be injected into the casing 6 after the pre-coated transponder 1 has been inserted into the casing, although this represents a less preferred embodiment, as it is anticipated that increased numbers air pockets within the binding material would result.

Furthermore, in another alternative embodiment the pre-coated transponders 1 may be inserted into the casings 6 under vacuum. In this embodiment, the casings 6 are transferred into the vacuum chamber 15C prior to insertion of the pre-coated transponders 1. This transfer may be performed during the curing time of the pre-coated transponders.

Those skilled in the relevant arts will appreciate that the receptacle, jig and vacuum chamber may take many different forms depending at least partly on the required shape and dimensions of the tags to be produced. Also, although the above description has described a robotic arm assembly as the means to move transponders and casings into and out of the vacuum chambers, other transport means, such as a gantry system may be used. Manual transfer of transponders and casings may also be performed.

The tag 100 described herein above has used the casing 2 as a mould for the binding material, the casing forming a permanent part of the tag 100. In an alternative embodiment, the binding material may be cured in a mould that is removable from the binding material after curing.

Where in the foregoing description reference has been made to specific components or integers of the invention having known equivalents then such equivalents are herein incorporated as if individually set forth.

Although this invention has been described by way of example and with reference to possible embodiments thereof, it is to be understood that modifications or improvements may be made thereto without departing from the scope of the invention as defined in the appended claims.

## Claims

1. A method of manufacturing a tag (100) having an electronic device (1) embedded in binding material (3,5), wherein the device includes an antenna winding, the method including:
a) applying a pre-coat of binding material (5) to the electronic device (1);
b) at least partially curing the pre-coat of binding material (5);
c) applying further binding material (3) to the resulting pre-coated electronic device; and
d) curing the further binding material (3),
the method being **characterized in that** it includes a step of removing air from behind the antenna winding by applying a vacuum at the surface of the binding material (5) during or after step a).

2. The method of claim 1, wherein the pre-coat of binding material (5) is the same material as the further binding material (3).

3. The method of claim 1 or claim 2, further including subjecting at least one of the pre-coat of binding material (5) and further binding material (3) to a vacuum prior to steps a) and c) respectively.

4. The method of any one of claims 1 to 3, wherein step a) includes subjecting the electronic device (1) and pre-coat of binding material (5) to a vacuum prior to the application of the pre-coat of binding material (5) and maintaining the vacuum during application of the pre-coat of binding material (5).

5. The method of any one of claims 1 to 4, including subjecting the further binding material (3) to a vacuum after performing step c).

6. The method of claim 4 or claim 5, further including vibrating at least one of the pre-coat of binding material (5) and further binding material (3) relative to the electronic device (1) while the binding material (3,5) is subjected to a vacuum.

7. The method of any one of claims 1 to 6, wherein step b) is of sufficiently short duration so that when the resulting pre-coated electronic device (1) is located in the further binding material (3), the pre-coat fuses with the further binding material (5).

8. The method of any one of claims 1 to 7, further including applying heat to the pre-coat of binding material (5) prior to performing step a).

9. The method of any one of claims 1 to 8, further including applying heat to the further binding material (3) prior to performing step c).

10. The method of any one of claims 1 to 9, further including applying heat to the further binding material (3) immediately after performing step c).

11. The method of claim 10, wherein the binding material (3,5) is epoxy resin and the method includes applying heat to the further binding material (3) at a temperature of approximately 60 - 100 degrees Celsius.

12. The method of any one of claims 1 to 11, wherein step a) includes allowing the electronic device (1) to locate within a volume of said binding material (3,5) substantially under its own weight.

13. The method of any one of claims 1 to 11, wherein step a) includes immersing the electronic device (1) within a volume of said binding material (3,5) at a. speed approximate to the speed that the electronic device (1) would sink into the binding material (3,5) under its own weight.

14. The method of any one of claims 1 to 12, wherein step c) includes allowing the pre-coated electronic device (1) to locate within a volume of said further binding material (3) substantially under its own weight.

15. The method of any one of claims 1 to 12, wherein step c) includes immersing the pre-coated electronic device (1) within a volume of said binding material (3,5) at a speed approximate to the speed that the electronic device (1) would sink into the binding material (3,5) under its own weight.

16. The method of claim 13 or claim 15, wherein the speed of immersion is a maximum speed that has been predetermined experimentally.

17. The method of claim 12 or claim 14, wherein step c) includes locating the pre-coated electronic device (1) and further binding material (3) within a casing (2) that forms an outer shell for the tag (100) and step d) includes allowing the binding material (3,5) to cure within the casing (2) and wherein the casing (2) includes one or more guides (18) to position the pre-coated electronic device (1) within the casing (2).

18. The method of any one of claims 1 to 11 or claim 13 or claim 15, wherein step c) includes locating the pre-coated electronic device (1) and further binding material (3) within a casing (2) that forms an outer shell for the tag and step d) includes allowing the binding material to cure within the casing.

19. The method of claim 17 or claim 18, wherein the pre-coat of binding material (5), further binding material (3) and casing (2) are constructed from materials suitable for consumption.

20. The method of claim 19, wherein the pre-coat of binding material (5) and further binding material (3) is epoxy resin and the casing (2) is acrylic.

21. The method of any one of claims 1 to 20, wherein the electronic device (1) is a transponder.

22. The method of any one of claims 1 to 21, wherein step d) includes partially curing at a first temperature greater than ambient temperature and then completing curing at a second temperature, less than the first temperature.

23. The method of claim 22, wherein the second temperature is ambient temperature.

24. The method of any one of claims 1 to 23, wherein the produced tag (100) has a length less than approximately 20 mm.

25. The method of claim 24, wherein the produced tag (100) has a diameter less than approximately 15 mm.

26. The method of claim 24, wherein the produced tag (100) has a diameter less than 10 mm.

27. Apparatus for embedding an electronic device (1) having an antenna winding within a binding material (3,5), the apparatus including:
a receptacle (6) for holding binding material (5) in a liquid state;
a mould or a jig (7) for holding a casing (2);
filling means (27,28) for filling said mould or a casing (2) held by said jig (7) with further binding material (3);
transport means (10,20) and an associated controller operable to receive one or more electronic devices (1) from a supply of electronic devices, perform a pre-coating operation by moving received electronic devices (1) into said receptacle (6) for holding binding material (5), and then move said electronic devices (1) into said mould or into a casing (2) held by said jig (7); and
a vacuum chamber (15,15B,15C) containing said receptacle (6) for holding binding material (5) operable to create a vacuum at the surface of the binding material (5) during at least part of the pre-coating operation to remove air from behind the antenna winding of the or each electronic device.

28. The apparatus of claim 27, wherein the transport means (10,20) is further operable to move said mould or said casing (2) into the vacuum chamber (15,15B,15C) after it has moved said electronic devices (1) into said mould or casing (2).

29. The apparatus of claim 27 or claim 28, wherein the transport means (10,20) includes a closure means (22) for the vacuum chamber (15,15B,15C) that moves with the transport means (10,20) and the transport means (10,20) is engageable with the one or more electronic devices (1) or with the mould or casing (2) through an arm (21) that extends into the vacuum chamber (15,15B,15C) from the closure means (22) when the closure means (22) has closed the vacuum chamber (15,15B,15C).

30. The apparatus of claim 29, wherein the transport means (10,20) includes a robotic arm assembly (20) movable about a pivot located outside of the vacuum chamber (15C).

31. The apparatus of claim 30 including two vacuum chambers (15C) located in different sectors about said pivot, each vacuum chamber including a receptacle (6) for holding binding material (5) in a liquid state and the robotic arm assembly (20) includes two of said arms (21) that extend into the vacuum chamber (15C) from the closure means (22) when the closure means (22) has closed the vacuum chamber (15C), each movable about said pivot.

32. The apparatus of any one of claims 27 to 31, including two endless conveyors (25) that index a plurality of said moulds or jigs (7) past the transport means (10,20).

33. The apparatus of claim 32, wherein the filling means (27,28) is located along said endless conveyors (25) upstream of the transport means (10,20).

## Patentansprüche

1. Verfahren zum Herstellen einer Markierung (100) mit einer elektronischen Vorrichtung (1), die in Bindematerial (3, 5) eingebettet ist, wobei die Vorrichtung eine Antennenwicklung aufweist, wobei das Verfahren die folgenden Schritte aufweist:
a) Auftragen einer Vorbeschichtung aus Bindematerial (5) auf die elektronische Vorrichtung (1);
b) wenigstens teilweises Aushärten der Vorbeschichtung aus einem Bindematerial (5);
c) Auftragen weiteren Bindematerials (3) auf die resultierende vorbeschichtete elektronische Vorrichtung; und
d) Aushärten des weiteren Bindematerials (3),
wobei das Verfahren **dadurch gekennzeichnet ist, dass** es einen Schritt des Entfernens von Luft von hinter der Antennenwicklung durch Beaufschlagen der Oberfläche des Bindematerials (5) mit einem Unterdruck während oder nach Schritt a) aufweist.

2. Verfahren nach Anspruch 1, wobei die Vorbeschichtung aus dem Bindematerial (5) das gleiche Material wie das weitere Bindematerial (3) ist.

3. Verfahren nach Anspruch 1 oder Anspruch 2, wobei die Vorbeschichtung aus dem Bindematerial (5) und/oder das weitere Bindematerial (3) einem Unterdruck vor Schritt a) bzw. c) ausgesetzt werden.

4. Verfahren nach einem der Ansprüche 1 bis 3, wobei die elektronische Vorrichtung (1) und die Vorbeschichtung aus dem Bindematerial (5) vor Auftragen der Vorbeschichtung aus dem Bindematerial (5) einem Unterdruck ausgesetzt werden und der Unterdruck während des Auftragens der Vorbeschichtung aus dem Bindematerial (5) aufrechterhalten bleibt.

5. Verfahren nach einem der Ansprüche 1 bis 4, wobei das weitere Bindematerial (3) nach Ausführen von Schritt c) einem Unterdruck ausgesetzt wird.

6. Verfahren nach Anspruch 4 oder Anspruch 5, wobei die Vorbeschichtung aus dem Bindematerial (5) und/oder das weitere Bindematerial (3) relativ zu der elektronischen Vorrichtung (1) vibrieren, während das Bindematerial (3, 5) einem Unterdruck ausgesetzt wird.

7. Verfahren nach einem der Ansprüche 1 bis 6, wobei der Schritt b) von ausreichend kurzer Dauer ist, so dass die Vorbeschichtung mit dem weiteren Bindematerial (3) verschmilzt, wenn sich die resultierende vorbeschichtete elektronische Vorrichtung (1) in dem weiteren Bindematerial (3) angeordnet ist.

8. Verfahren nach einem der Ansprüche 1 bis 7, wobei vor Ausführen des Schritts a) die Vorbeschichtung aus dem Bindematerial (5) erwärmt wird.

9. Verfahren nach einem der Ansprüche 1 bis 8, wobei vor Ausführen des Schritts c) das weitere Bindematerial (3) erwärmt wird.

10. Verfahren nach einem der Ansprüche 1 bis 9, wobei unmittelbar nach Ausführen des Schritts c) das weitere Bindematerial (3) erwärmt wird.

11. Verfahren nach Anspruch 10, wobei das Bindematerial (3, 5) Epoxidharz ist und das weitere Bindematerial (3) auf eine Temperatur von etwa 60 - 100 Grad Celsius erwärmt wird.

12. Verfahren nach einem der Ansprüche 1 bis 11, wobei der Schritt a) das Anordnenlassen der elektronischen Vorrichtung (1) im wesentlichen aufgrund ihres Eigengewichts in einem Volumen des Bindematerials (3, 5) umfasst.

13. Verfahren nach einem der Ansprüche 1 bis 11, wobei der Schritt a) das Tauchen der elektronischen Vorrichtung (1) in ein Volumen des Bindematerials (3, 5) mit einer Geschwindigkeit in der Nähe der Geschwindigkeit, bei welcher die elektronische Vorrichtung (1) unter ihrem Eigengewicht in das Bindematerial (3, 5) sinken würde, umfasst.

14. Verfahren nach einem der Ansprüche 1 bis 12, wobei der Schritt c) das Anordnenlassen der vorbeschichteten elektronischen Vorrichtung (1) im wesentlichen aufgrund ihres Eigengewichts in einem Volumen des weiteren Bindematerials (3) umfasst.

15. Verfahren nach einem der Ansprüche 1 bis 12, wobei der Schritt c) das Tauchen der vorbeschichteten elektronischen Vorrichtung (1) in ein Volumen des Bindematerials (3, 5) mit einer Geschwindigkeit in der Nähe der Geschwindigkeit, bei welcher die elektronische Vorrichtung (1) unter ihrem Eigengewicht in das Bindematerial (3, 5) sinken würde, umfasst.

16. Verfahren nach Anspruch 13 oder Anspruch 15, wobei die Geschwindigkeit des Tauchens eine Maximalgeschwindigkeit ist, welche vorher experimentell bestimmt wurde.

17. Verfahren nach Anspruch 12 oder Anspruch 14, wobei der Schritt c) das Anordnen der vorbeschichteten elektronischen Vorrichtung (1) und des weiteren Bindematerials (3) in einem Gehäuse (2), welches eine Außenkapsel für die Markierung (100) bildet, der Schritt d) das Aushärtenlassen des Bindematerials (3, 5) in dem Gehäuse (2), und das Gehäuse (2) eine oder mehrere Führungen (18) zum Positionieren der vorbeschichteten elektronischen Vorrichtung (1) in dem Gehäuse (2) umfassen.

18. Verfahren nach einem der Ansprüche 1 bis 11 oder nach Anspruch 13 oder Anspruch 15, wobei der Schritt c) das Anordnen der vorbeschichteten elektronischen Vorrichtung (1) und des weiteren Bindematerials (3) in einem Gehäuse (2), welches eine Außenkapsel für die Markierung bildet, und der Schritt d) das Aushärtenlassen des Bindematerials in dem Gehäuse (2) umfassen.

19. Verfahren nach Anspruch 17 oder Anspruch 18, wobei die Vorbeschichtung aus dem Bindematerial (5) und das weitere Bindematerial (3) und das Gehäuse (2) aus für den Verbrauch geeigneten Materialien konstruiert werden.

20. Verfahren nach Anspruch 19, wobei die Vorbeschichtung aus dem Bindematerial (5) und das weitere Bindematerial (3) Epoxidharz sind und das Gehäuse (2) Acryl ist.

21. Verfahren nach einem der Ansprüche 1 bis 20, wobei die elektronische Vorrichtung (1) ein Transponder ist.

22. Verfahren nach einem der Ansprüche 1 bis 21, wobei der Schritt d) das teilweise Aushärten bei einer ersten Temperatur, welche höher als die Umgebungstemperatur ist, und daraufhin das vollständige Aushärten bei einer zweiten Temperatur, welche niedriger als die erste Temperatur ist, umfasst.

23. Verfahren nach Anspruch 22, wobei die zweite Temperatur die Umgebungstemperatur ist.

24. Verfahren nach einem der Ansprüche 1 bis 23, wobei die hergestellte Markierung (100) eine Länge von weniger als etwa 20 mm aufweist.

25. Verfahren nach Anspruch 24, wobei die hergestellte Markierung (100) einen Durchmesser von weniger als etwa 15 mm aufweist.

26. Verfahren nach Anspruch 24, wobei die hergestellte Markierung (100) einen Durchmesser von weniger als 10 mm aufweist.

27. Vorrichtung zum Einbetten einer elektronischen Vorrichtung (1) mit einer Antennenwicklung in ein Bindematerial (3, 5), mit:
einem Behälter (6) zum Halten von Bindematerial (5) in einem flüssigen Zustand;
einer Form oder einer Aufspanneinrichtung (7) zum Halten eines Gehäuses (2);
Füllmitteln (27, 28) zum Füllen der Form oder eines Gehäuses (2), die/das durch die Aufspanneinrichtung (7) gehalten ist, mit weiterem Bindematerial (3);
Transportmitteln (10, 20) und eine zugeordnete Steuereinheit, welche konfiguriert sind, eine oder mehrere elektronische Vorrichtungen (1) von einer Zufuhr elektronischer Vorrichtungen aufzunehmen, mittels Bewegen der empfangenen elektronischen Vorrichtungen (1) in den Behälter (6) zum Halten von Bindematerial (5) eine Vorbeschichtungsoperation auszuführen und daraufhin die elektronischen Vorrichtungen (1) in die Form oder in ein Gehäuse (2) zu bewegen, welche/welches durch die Aufspanneinrichtung (7) gehalten ist; und
einer Unterdruckkammer (15, 15B, 15C), welche den Behälter (6) zum Halten von Bindematerial (5) umfasst und konfiguriert ist, wenigstens während eines Teils der Vorbeschichtungsoperation an der Oberfläche des Bindematerials (5) einen Unterdruck zu erzeugen, um Luft hinter der Antennenwicklung der einen der mehreren elektronischen Vorrichtungen zu entfernen.

28. Vorrichtung nach Anspruch 27, wobei das Transportmittel (10, 20) konfiguriert ist, die Form oder das Gehäuse (2) in die Unterdruckkammer (15, 15B, 15C) zu bewegen, nachdem das Transportmittel (10, 20) die elektronischen Vorrichtungen (1) in die Form oder in das Gehäuse (2) bewegt hat.

29. Vorrichtung nach Anspruch 27 oder Anspruch 28, wobei das Transportmittel (10, 20) ein Verschlussmittel (22) für die Unterdruckkammer (15, 15B, 15C) aufweist, welches sich mit dem Transportmittel (10, 20) bewegt, und konfiguriert ist, mit der einen oder mit den mehreren elektronischen Vorrichtungen (1) oder mit der Form oder mit dem Gehäuse (2) über einen Arm (21), welcher sich von dem Verschlussmittel (22) in die Unterdruckkammer (15, 15B, 15C) erstreckt, wenn das Verschlussmittel (22) die Unterdruckkammer (15, 15B, 15C) geschlossen hat, wechselzuwirken.

30. Vorrichtung nach Anspruch 29, wobei das Transportmittel (10, 20) eine Roboterarmbaueinheit (20) aufweist, welche um einen Drehpunkt beweglich ist, welcher sich außerhalb der Unterdruckkammer (15C) angeordnet ist.

31. Vorrichtung nach Anspruch 30, mit zwei Unterdruckkammern (15C), welche sich in verschiedenen Bereichen um den Drehpunkt befinden, wobei die zwei Unterdruckkammern (15C) jeweils einen Behälter (6) zum Halten von Bindematerial (5) in einem flüssigen Zustand aufweisen und die Roboterarmbaueinheit (20) zwei des einen Arms (21) aufweist, welcher sich von dem Verschlussmittel (22) in die Unterdruckkammer (15C) erstreckt, wenn das Verschlussmittel (22) die Unterdruckkammer (15C) geschlossen hat, wobei die zwei Arme (21) jeweils um den Drehpunkt beweglich sind.

32. Vorrichtung nach einem der Ansprüche 27 bis 31, mit zwei endlosen Fördereinrichtungen (25), welche konfiguriert sind, mehrere der Formen oder Aufspanneinrichtungen (7) intermittierend an dem Transportmittel (10, 20) vorbei zu bewegen.

33. Vorrichtung nach Anspruch 32, wobei das Füllmittel (27, 28) entlang der endlosen Fördereinrichtungen (25) vor dem Transportmittel (10, 20) angeordnet ist.

## Revendications

1. Procédé de fabrication d'une étiquette (100) comportant un dispositif électronique
(1) incorporé dans un matériau liant (3, 5), étant donné que dispositif comprend un enroulement d'antenne, le procédé comprenant les étapes suivantes :
a) application d'une précouche de matériau liant (5) sur le dispositif électronique (1) ;
b) durcissement au moins partiel de la précouche de matériau liant (5) ;
c) application de matériau liant supplémentaire (3) sur le dispositif électronique résultant revêtu de la précouche ; et
d) durcissement du matériau liant supplémentaire (3),
le procédé étant **caractérisé en ce qu'**il comprend une étape d'élimination de l'air de derrière l'enroulement d'antenne par application d'un vide à la surface du matériau liant (5) pendant ou après l'étape a).

2. Procédé selon la revendication 1, dans lequel la précouche de matériau liant (5) est le même matériau que le matériau liant supplémentaire (3).

3. Procédé selon la revendication 1 ou 2, comprenant en outre l'exposition de la précouche de matériau liant (5) et/ou du matériau liant supplémentaire (3) à un vide avant les étapes a) et c) respectivement.

4. Procédé selon l'une quelconque des revendications 1 à 3, dans lequel l'étape a) comprend l'exposition du dispositif électronique (1) et de la précouche de matériau liant (5) à un vide avant l'application de la précouche de matériau liant (5) et le maintien du vide pendant l'application de la précouche de matériau liant (5).

5. Procédé selon l'une quelconque des revendications 1 à 4, comprenant l'exposition du matériau liant supplémentaire (3) à un vide après exécution de l'étape c).

6. Procédé selon la revendication 4 ou la revendication 5, comprenant en outre la vibration de la précouche de matériau liant (5) et/ou du matériau liant supplémentaire (3) par rapport au dispositif électronique (1) pendant que le matériau liant (3, 5) est exposé à un vide.

7. Procédé selon l'une quelconque des revendications 1 à 6, dans lequel l'étape b) est d'une durée suffisamment courte pour que, quand le dispositif électronique (1) résultant revêtu de la précouche est positionné dans le matériau liant supplémentaire (3), la précouche s'amalgame avec le matériau liant supplémentaire (3).

8. Procédé selon l'une quelconque des revendications 1 à 7, comprenant en outre l'application de chaleur à la précouche de matériau liant (5) avant l'exécution de l'étape a).

9. Procédé selon l'une quelconque des revendications 1 à 8, comprenant en outre l'application de chaleur au matériau liant supplémentaire (3) avant l'exécution de l'étape c).

10. Procédé selon l'une quelconque des revendications 1 à 9, comprenant en outre l'application de chaleur au matériau liant supplémentaire (3) immédiatement après l'exécution de l'étape c).

11. Procédé selon la revendication 10, dans lequel le matériau liant (3, 5) est de la résine époxy et le procédé comprend l'application de chaleur au matériau liant supplémentaire (3) à une température d'environ 60 à 100 degrés Celsius.

12. Procédé selon l'une quelconque des revendications 1 à 11, dans lequel l'étape a) comprend le fait de laisser le dispositif électronique (1) se positionner à l'intérieur d'un volume dudit matériau liant (3, 5) essentiellement sous l'effet de son propre poids.

13. Procédé selon l'une quelconque des revendications 1 à 11, dans lequel l'étape a) comprend l'immersion du dispositif électronique (1) à l'intérieur d'un volume dudit matériau liant (3, 5) à une vitesse environ égale à la vitesse à laquelle le dispositif électronique (1) coulerait dans le matériau liant (3, 5) sous l'effet de son propre poids.

14. Procédé selon l'une quelconque des revendications 1 à 12, dans lequel l'étape c) comprend le fait de laisser le dispositif électronique (1) revêtu de la précouche se positionner à l'intérieur d'un volume dudit matériau liant supplémentaire (3) essentiellement sous l'effet de son propre poids.

15. Procédé selon l'une quelconque des revendications 1 à 12, dans lequel l'étape c) comprend l'immersion du dispositif électronique (1) revêtu de la précouche à l'intérieur d'un volume dudit matériau liant (3, 5) à une vitesse environ égale à la vitesse à laquelle le dispositif électronique (1) coulerait dans le matériau liant (3, 5) sous l'effet de son propre poids.

16. Procédé selon la revendication 13 ou la revendication 15, dans lequel la vitesse d'immersion est une vitesse maximale qui a été prédéterminée expérimentalement.

17. Procédé selon la revendication 12 ou la revendication 14, dans lequel l'étape c) comprend le positionnement du dispositif électronique (1) revêtu de la précouche et du matériau liant supplémentaire (3) à l'intérieur d'un boîtier (2) qui forme une enveloppe extérieure pour l'étiquette (100) et l'étape d) comprend le fait de laisser le matériau liant durcir à l'intérieur du boîtier (2) et dans lequel le boîtier (2) comporte un ou plusieurs guides pour positionner le dispositif électronique (1) revêtu de la précouche à l'intérieur du boîtier (2).

18. Procédé selon l'une quelconque des revendications 1 à 11 ou la revendication 13 ou la revendication 15, dans lequel l'étape c) comprend le positionnement du dispositif électronique (1) revêtu de la précouche et du matériau liant supplémentaire (3) à l'intérieur d'un boîtier (2) qui forme une enveloppe extérieure pour l'étiquette et l'étape d) comprend le fait de laisser le matériau liant durcir à l'intérieur du boîtier (2).

19. Procédé selon la revendication 17 ou la revendication 18, dans lequel la précouche de matériau liant (5), le matériau liant supplémentaire (3) et le boîtier (2) sont réalisés à partir de matériaux propres à la consommation.

20. Procédé selon la revendication 19, dans lequel la précouche de matériau liant (5) et le matériau liant supplémentaire (3) sont en résine époxy et le boîtier (2) est en acrylique.

21. Procédé selon l'une quelconque des revendications 1 à 20, dans lequel le dispositif électronique (1) est un transpondeur.

22. Procédé selon l'une quelconque des revendications 1 à 21, dans lequel l'étape d) comprend un durcissement partiel à une première température supérieure à la température ambiante puis l'achèvement du durcissement à une seconde température inférieure à la première température.

23. Procédé selon la revendication 22, dans lequel la seconde température est la température ambiante.

24. Procédé selon l'une quelconque des revendications 1 à 23, dans lequel l'étiquette (100) produite a une longueur inférieure à environ 20 mm.

25. Procédé selon la revendication 24, dans lequel l'étiquette (100) produite a un diamètre inférieur à environ 15 mm.

26. Procédé selon la revendication 24, dans lequel l'étiquette (100) produite a un diamètre inférieur à 10 mm.

27. Appareil pour incorporer un dispositif électronique (1) comportant un enroulement d'antenne à l'intérieur d'un matériau liant (3, 5), l'appareil comprenant :
un réceptacle (6) pour maintenir le matériau liant (5) dans un état liquide ;
un moule ou un gabarit (7) pour tenir un boîtier (2);
un moyen de remplissage (27, 28) pour remplir ledit moule ou un boîtier (2) tenu par ledit gabarit (7) de matériau liant supplémentaire (3) ;
un moyen de transport (10, 20) et un contrôleur associé permettant de recevoir un ou plusieurs dispositifs électroniques (1) d'une source d'approvisionnement en dispositifs électroniques, d'exécuter une opération d'application de précouche en déplaçant les dispositifs électroniques (1) reçus dans ledit réceptacle (6) de maintien du matériau liant (5), et ensuite de déplacer lesdits dispositifs électroniques (1) dans ledit moule ou dans un boîtier (2) retenu par ledit gabarit (7) ; et
une chambre à vide (15, 15B, 15C) contenant ledit réceptacle (6) de maintien du matériau liant (5), permettant de créer un vide à la surface du matériau liant (5) pendant au moins une partie de l'opération d'application de précouche afin d'éliminer l'air de derrière l'enroulement d'antenne du ou de chaque dispositif électronique.

28. Appareil selon la revendication 27, dans lequel le moyen de transport (10, 20) permet en outre de déplacer ledit moule ou ledit boîtier (2) dans la chambre à vide (15, 15B, 15C) après avoir déplacé lesdits dispositifs électroniques (1) dans ledit moule ou boîtier (2).

29. Appareil selon la revendication 27 ou la revendication 28, dans lequel le moyen de transport (10, 20) comprend un moyen de fermeture (22) pour la chambre à vide (15, 15B, 15C) qui se déplace avec le moyen de transport (10, 20) et le moyen de transport (10, 20) peut être mis en prise avec le ou les dispositifs électroniques (1) ou avec le moule ou boîtier (2) à travers un bras (21) qui s'étend dans la chambre à vide (15, 15B, 15C) depuis le moyen de fermeture (22) quand le moyen de fermeture (22) a fermé la chambre à vide (15, 15B, 15C).

30. Appareil selon la revendication 29, dans lequel le moyen de transport (10, 20) comprend un ensemble bras robotique (20) mobile autour d'un pivot situé en dehors de la chambre à vide (15C).

31. Appareil selon la revendication 30, comprenant deux chambres à vide (15C) situées dans des secteurs différents autour dudit pivot, chaque chambre à vide comprenant un réceptacle (6) de maintien du matériau liant (5) dans un état liquide et l'ensemble bras robotique (20) comprenant deux desdits bras (21) qui s'étendent dans la chambre à vide (15C) depuis le moyen de fermeture (22) quand le moyen de fermeture (22) a fermé la chambre à vide (15C), chacun étant mobile autour dudit pivot.

32. Procédé selon l'une quelconque des revendications 27 à 31, comprenant deux convoyeurs sans fin (25) qui font avancer pas à pas une pluralité desdits moules ou gabarits (7) en traversant le moyen de transport (10, 20).

33. Appareil selon la revendication 32, dans lequel le moyen de remplissage (27, 28) est situé le long desdits convoyeurs sans fin (25) en amont du moyen de transport (10, 20).
